# EUROPEAN PATENT SPECIFICATION

(11) **EP 3 425 890 B1**
(45) Date of publication and mention of the grant of the patent: **30.12.2020**
(21) Application number: 16897503.5
(22) Date of filing: 05.04.2016
(51) Int. Cl.: H04M 1/725, H04M 1/22

(54) **METHOD AND APPARATUS FOR CONTROLLING BACKLIGHT OF DISPLAY SCREEN, ELECTRONIC DEVICE AND STORAGE MEDIUM**
VERFAHREN UND VORRICHTUNG ZUR HINTERGRUNDBELEUCHTUNGSSTEUERUNG EINES ANZEIGEBILDSCHIRMS, ELEKTRONISCHE VORRICHTUNG UND SPEICHERMEDIUM
PROCÉDÉ ET APPAREIL PERMETTANT DE COMMANDER LE RÉTROÉCLAIRAGE D'UN ÉCRAN D'AFFICHAGE, DISPOSITIF ÉLECTRONIQUE ET SUPPORT DE STOCKAGE

(43) Date of publication of application: 09.01.2019
(73) Proprietor: Huawei Technologies Co., Ltd., Longgang District Shenzhen, Guangdong 518129 (CN)
(72) Inventor: ZHOU, Dongdong, Shenzhen Guangdong 518129 (CN); ZHOU, Xiyu, Shenzhen Guangdong 518129 (CN); WANG, Guanglin, Shenzhen Guangdong 518129 (CN); WANG, Liang, Shenzhen Guangdong 518129 (CN)
(74) Representative: Pfenning, Meinig & Partner mbB
(86) International application number: PCT/CN2016/078446
(87) International publication number: WO 2017/173568

(56) References cited:
- CN-A- 101 741 983
- CN-A- 102 665 008
- CN-A- 102 883 061
- CN-A- 103 024 197
- CN-A- 104 243 646
- CN-A- 104 618 565
- CN-A- 104 811 547
- JP-B2- 5 069 205
- US-A1- 2015 123 922
- US-A1- 2015 264 170

## Description

### TECHNICAL FIELD

Embodiments of the present disclosure relate to communications technologies, and in particular, to a method and an apparatus for controlling a display screen backlight, and a storage medium.

### BACKGROUND

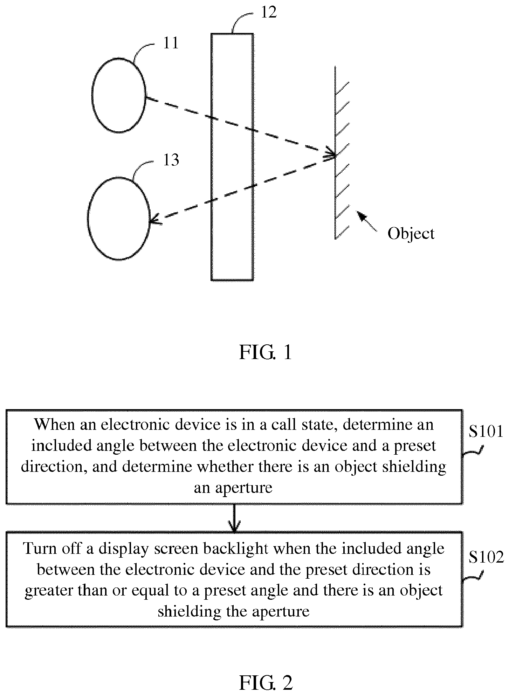

In a terminal, an optical proximity sensor includes an infrared emitting diode (Infrared Emitting Diode, IR LED for short) and an infrared receiver. In addition, on a display screen of the terminal, an aperture is disposed near an earpiece. As shown in FIG. 1, an IR LED 11 emits infrared light through an aperture 12. An infrared receiver 13 receives infrared light that is outside the aperture 12 and that is reflected by an object located in a direction in which the IR LED emits the infrared light, and transmits an intensity value of the received infrared light to a processor (not shown in the figure). The processor determines, according to the intensity value of the infrared light, whether there is an object near the aperture. When it is determined that there is no object near the aperture, a display screen backlight is turned on; or when it is determined that there is an object near the aperture, the display screen backlight is turned off, so as to automatically adjust the display screen backlight to be on or off and to reduce power consumption. A shorter distance between the object and the aperture indicates a larger intensity value of the infrared light that is reflected by the object and that is received by the infrared receiver.

That the processor determines, according to the intensity value of the infrared light, whether there is an object near the aperture is specifically: When the intensity value of the infrared light is greater than or equal to an upper limit, the processor determines that there is an object near the aperture, where the upper limit is a preset threshold for turning off the display screen backlight; or when the intensity value of the infrared light is less than or equal to a lower limit, the processor determines that there is no object near the aperture, where the lower limit is a preset threshold for turning on the display screen backlight.

However, in a scenario that the aperture is covered by a dark object (such as hair), or the like, when the aperture is covered by the dark object, the light emitted by the IR LED is absorbed by the dark object because the dark object has a strong capability of absorbing the light. Therefore, the intensity of the infrared light reflected to the infrared receiver is relatively weak. For example, during a call process, a user puts the terminal close to an ear, and in a normal situation, the infrared light emitted by the IR LED passes through the aperture and then is reflected to the infrared receiver by the ear. The intensity value of the infrared light transmitted to the processor by the infrared receiver is greater than the upper limit. The processor accordingly determines that there is an object shielding the aperture, and the display screen backlight is turned off. However, if hair accidentally shields the aperture when a user in a call holds the terminal next to an ear, the light emitted by the IR LED is absorbed by the hair, and the intensity value of the infrared light reflected to the infrared receiver is less than the lower limit. The processor accordingly determines that no object shields the aperture currently, and controls the display screen to be in a turned-on state, causing inaccurate adjustment of the display screen backlight.

In US 2015/264170 A1 a display of a mobile device is managed during a voice communication session using a proximity sensor and an accelerometer. In one example, the display of a mobile device is turned off during a phone call on the mobile device when a proximity sensor detects an object is proximate the device and an accelerometer determines the device is in a first orientation.

In US 2015/123922 A1 a portable electronic device includes a touch screen display, a proximity sensor, an ambient light sensor, and a controller. The proximity sensor detects and outputs an intensity of the reflected light. The ambient light sensor detects and outputs a variation of an ambient light level of the portable electronic device. The controller deactivates the touch screen display when it is determined by the controller that the intensity of the reflected light is greater than a predetermined intensity, and determines whether the variation of the ambient light level is greater than a predetermined level when it is determined by the controller that the intensity of the reflected light is less than the predetermined intensity. The controller further deactivates the touch screen display when it is determined by the controller that the variation of the ambient light level is greater than the predetermined level.

### SUMMARY

According to the present application, the above objects are solved by the claimed matter according to the independent claims. Embodiments of the present disclosure provide a method and an apparatus for controlling a display screen backlight, and a storage medium, so as to improve accuracy of adjusting the display screen backlight to be on or off when an aperture is covered by a dark object.

### BRIEF DESCRIPTION OF DRAWINGS

To describe the technical solutions in some embodiments of the present disclosure or in the prior art more clearly, the following briefly describes the accompanying drawings for describing the embodiments or the prior art.
FIG. 1 is a schematic diagram of relative positions among an aperture, an IR LED, and an infrared receiver;
FIG. 2 is a schematic flowchart of a method for controlling a display screen backlight according to the present disclosure;
FIG. 3 is a schematic diagram of included angles between a terminal and x, y, and z coordinate axes;
FIG. 4 shows a correspondence between an intensity value of infrared light received by an infrared receiver and a distance between an object and an aperture;
FIG. 5 is a schematic diagram of thresholds according to an embodiment of the present disclosure;
FIG. 6 is a schematic structural diagram of an apparatus for controlling a display screen backlight according to the present disclosure; and
FIG. 7 is a schematic structural diagram of an electronic device for controlling a display screen backlight according to the present disclosure.

### DESCRIPTION OF EMBODIMENTS

The following clearly describes the technical solutions in some embodiments of the present disclosure with reference to the accompanying drawings in some embodiments of the present disclosure.

The terms "include", "contain" and any other variants in the specification, claims, and the accompanying drawings of the present disclosure mean to cover the non-exclusive inclusion, for example, a process, method, system, product, or device that includes a list of steps or units is not necessarily limited to those steps or units, but may include other steps or units not expressly listed or inherent to such a process, method, product, or device.

FIG. 2 is a schematic flowchart of a method for controlling a display screen backlight according to the present disclosure. An embodiment of the present disclosure provides a method for controlling a display screen backlight. The method may be executed by an apparatus for controlling the display screen backlight. The apparatus may be implemented by means of software and/or hardware, and the apparatus may be integrated into a mobile phone and another electronic device supporting a call function. It should be clarified that the electronic device has a display screen and an optical proximity sensor, and an aperture is disposed on the display screen. As shown in FIG. 2, the method includes the following steps.

S101. When the electronic device is in a call state, determine an included angle between the electronic device and a preset direction, and determine whether there is an object shielding the aperture.

S102. Turn off the display screen backlight when the included angle between the electronic device and the preset direction is greater than or equal to a preset angle and there is an object shielding the aperture.

If it is detected that the electronic device is in a call state, the included angle between the electronic device and the preset direction is determined, so as to determine a posture of holding the electronic device by a user according to the included angle between the electronic device and the preset direction and with reference to a call state, for example, whether the user holds the electronic device next to an ear to answer a call.

For the included angle between the electronic device and the preset direction, persons skilled in the art may understand that a preset direction is first set, and then when the user holds the electronic device next to an ear, an angle is formed between the electronic device and the preset direction. Therefore, in a specific implementation, magnitude of an included angle between the electronic device and the preset direction when a user holds the electronic device next to the ear may be calculated according to a user's habit of using the electronic device.

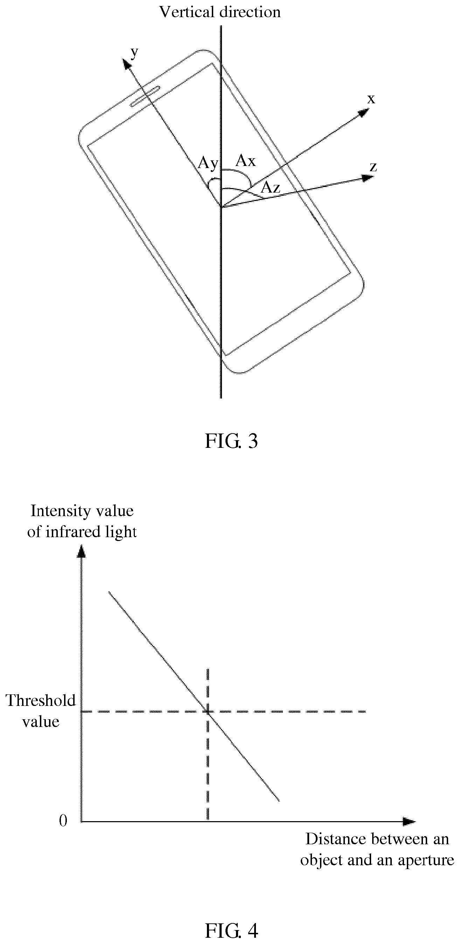

As shown in FIG. 3, the included angle between the electronic device and the preset direction may be an included angle between a vertical direction and an axis perpendicular to a plane where a display screen of the electronic device is located, namely Az, where a z-axis indicates an axis perpendicular to the plane where the display screen is located; or, may be an included angle between a vertical direction and a plane where a display screen of the electronic device is located, such as an Ax or Ay, where an x-axis is parallel to an upper/lower edge of the electronic device, and a y-axis is parallel to a left/right edge of the electronic device.

In the foregoing embodiment, the preset direction may be the vertical direction. In this scenario, the determining an included angle between the electronic device and the preset direction may include: determining the included angle between the electronic device and the vertical direction by using a gravity sensor. For example, for the included angle shown in FIG. 3, acceleration Gx, Gy, and Gz that are in a direction of the x-axis, the y-axis, and the z-axis respectively may be read out by using the gravity sensor, and Ax, Ay, and Az may be obtained by using the following equations: $Gx = g \times cosAx ,$ $Gy = g \times cosAyGy = g \times cosAy ,$ and $Gz = g \times cosAzGz = g \times cosAz ,$ where g is gravitational acceleration.

In the foregoing manner, the included angle between the vertical direction and the axis perpendicular to the plane where the display screen of the electronic device is located (namely Az), or the included angle between the vertical direction and the plane where the display screen of the electronic device is located (namely Ax or Ay) is determined.

In addition, for determining whether there is an object shielding the aperture, reference is also made to FIG. 1. An intensity value of infrared light reflected to an infrared receiver 13 by an object is greater when the object is closer to an aperture 12, and therefore, it may be determined, according to the intensity value of the infrared light received by the infrared receiver 13, whether there is an object shielding the aperture. When the intensity value of the infrared light received by the infrared receiver 13 is greater than an upper limit, it may be determined that there is an object shielding the aperture.

When the included angle between the electronic device and the preset direction is greater than or equal to the preset angle and there is an object shielding the aperture, the display screen backlight is turned off (step S102).

Specifically, determining a magnitude relationship between the preset angle and the included angle between the electronic device and the preset direction includes: determining that the included angle between the electronic device and the preset direction is greater than or equal to the preset angle, or the included angle between the electronic device and the preset direction is less than the preset angle.

When the included angle between the electronic device and the preset direction is greater than or equal to the preset angle, it may be preliminarily determined that the electronic device is in a state of being handheld by a user, and with reference to a call state, it is determined that the user holds the electronic device next to an ear, which is defined as an answering posture herein. When the included angle between the electronic device and the preset direction is less than the preset angle or the electronic device is not in a call state, it is determined that the user does not hold the electronic device next to an ear, which is defined as a non-answering posture.

Persons skilled in the art may understand that the magnitude relationship between the preset angle and the included angle between the electronic device and the preset direction provided in this embodiment of the present disclosure is merely a specific implementation of this embodiment of the present disclosure and may be properly adjusted according to a design requirement.

It should also be noted that the answering posture and the non-answering posture are merely used to distinguish whether a user holds the electronic device next to an ear, and other terms may be used to define whether a user holds the electronic device next to an ear. No limitation is set thereto in this embodiment of the present disclosure.

FIG. 4 shows a correspondence between an intensity value of infrared light received by an infrared receiver and a distance between an object and an aperture. As shown in FIG. 4, a lateral axis indicates the distance between the object and the aperture, a longitudinal axis indicates the intensity value of infrared light received by the infrared receiver, and the distance between the object and the aperture is inversely proportional to the intensity value of the infrared light received by the infrared receiver: A greater distance between the object and the aperture indicates a smaller intensity value of the infrared light received by the infrared receiver. It should be understood in this field that when the intensity value of the infrared light is greater than or equal to a threshold (such as a preset threshold mentioned below), the distance between the object and the aperture is less than a fixed value, that is, there is an object shielding or near the aperture.

In some implementations, to prevent misoperations, when a period for which an included angle between the electronic device and a preset direction keeps greater than or equal to the preset angle is longer than a first preset period, and/or a period for which an object shields the aperture is longer than a second preset period, the display screen backlight is turned off. The first preset period and the second preset period may be equal or may not be equal. No limitation is set in the present disclosure.

In this embodiment, when it is detected that the electronic device is in a call state, the included angle between the electronic device and the preset direction is determined and whether there is an object shielding the aperture is determined. When the included angle between the electronic device and the preset direction is greater than or equal to the preset angle and there is an object shielding the aperture, the display screen backlight is turned off. In this way, it is determined, with reference to the included angle between the electronic device and the preset direction and whether there is an object shielding the aperture in a call state, that the display screen backlight is to be turned off or turned on. Compared with the prior-art solution that the display screen backlight is turned off or turned on merely according to whether there is an object shielding the aperture, this embodiment of the present disclosure may improve accuracy of adjusting the display screen backlight to be on or off, improving user experience.

Optionally, the determining whether there is an object shielding the aperture may specifically be: determining a current intensity value of the infrared light; and if the current intensity value of the infrared light is greater than or equal to a preset threshold, determining that there is an object shielding the aperture, or if the current intensity value of the infrared light is less than the preset threshold, determining that no object shields the aperture. The preset threshold is an intensity value of infrared light received by the infrared receiver when a dark object shields the aperture.

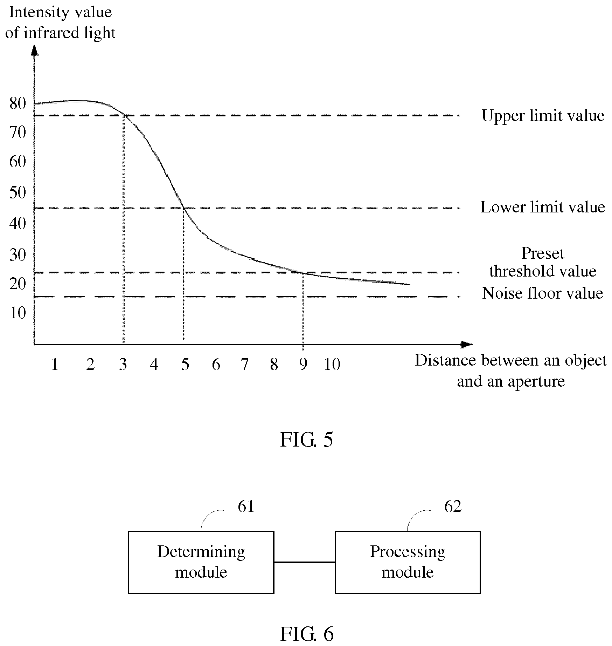

FIG. 5 is a schematic diagram of an upper limit, a lower limit, a preset threshold, and a noise floor value. Referring to FIG. 5, a lateral axis indicates a distance between an object and an aperture, and a longitudinal axis indicates an intensity value of the infrared light. Specific values, namely 1 to 10 on a lateral axis and 10 to 80 on a longitudinal axis, are merely examples for description and do not limit the present disclosure. In this embodiment of the present disclosure, based on the upper limit and the lower limit, the preset threshold is added, and the preset threshold is between a noise floor value and the lower limit.

According to a definition in the prior art, the lower limit is a threshold for turning on a display screen backlight, that is, when the intensity value of the infrared light received by the infrared receiver is less than the lower limit, the display screen backlight is turned on. The noise floor value is used to represent the intensity value of the infrared light in an ideal state that no object shields the aperture. However, in this embodiment of the present disclosure, the preset threshold is the intensity value of the infrared light received by the infrared receiver when the dark object shields the aperture. When the dark object shields the aperture, the intensity of the infrared light received by the infrared receiver was relatively weak because the dark object has a relatively strong capability of absorbing the infrared light. Therefore, the preset threshold is less than the lower limit. When a user holds the electronic device in a call state and black hair shields the aperture, the intensity value of the infrared light reflected to the infrared receiver may be less than the lower limit and greater than or equal to the preset threshold because most of the infrared light emitted by an infrared emitter is absorbed by the black hair. It is determined, according to the intensity of the infrared light, that there is an object shielding the aperture, and further the display screen backlight is turned off. Compared with the prior art, this embodiment of the present disclosure can improve user experience, reduce a loss, and prolong a battery service life.

Next, based on the foregoing embodiment, other methods for adjusting the display screen backlight are described in specific implementations.

In a specific implementation, when the electronic device is in a call state, the included angle between the electronic device and the preset direction is determined and whether there is an object shielding the aperture is determined. When the included angle between the electronic device and the preset direction is greater than or equal to the preset angle and no object shields the aperture, the display screen backlight is turned on. In this specific implementation, although the electronic device in a call state is next to an ear, the display screen backlight is turned on in this case because the intensity of the infrared light received by the infrared receiver is less than the preset threshold, that is, a distance between the ear and the aperture is relatively far.

A difference between the specific implementation and the foregoing embodiment lies in only that whether there is an object shielding the aperture. This can avoid turning off the display screen backlight in a scenario of performing a call far from an ear, improving user experience.

In another specific implementation, the method for controlling the display screen backlight may further include: when the electronic device is in a call state, the included value between the electronic device and the preset direction is determined, and whether there is an object shielding the aperture is determined. When the included angle between the electronic device and the preset direction is less than the preset angle, and a current intensity value of the infrared light is less than the lower limit, the display screen backlight is turned on. In this implementation, it is determined, according to that the included angle between the electronic device and the preset direction is less than the preset angle and the current intensity value of the infrared light is less than the lower limit, that the electronic device is in a non-answering posture currently, and no object shields the aperture. Then, the display screen backlight is turned on. This improves user experience.

In still another specific implementation, the method for controlling the display screen backlight may further include: when the electronic device is in a call state, the included value between the electronic device and the preset direction is determined, and whether there is an object shielding the aperture is determined. When the included angle between the electronic device and the preset direction is less than the preset angle, and the current intensity value of the infrared light is greater than the upper limit, the display screen backlight is turned off. The upper limit is used as a threshold for turning off the display screen backlight when there is an object shielding the aperture. In this implementation, it is determined, according to that the current intensity value of the infrared light is greater than the upper limit, that there is an object shielding the aperture. The display screen backlight is turned off even if the electronic device is in a non-answering state.

With reference to the embodiments shown in FIG. 5 and FIG. 2 and this implementation, it can be learnt that the electronic device turns off the display screen backlight provided that the current intensity value of the infrared light is greater than the upper limit, that is, there is an object shielding the aperture, no matter the included angle between the electronic device and the preset direction is greater than or equal to the preset angle, or the included angle between the electronic device and the preset direction is less than the preset angle.

In yet another specific implementation, the method for controlling the display screen backlight may further include: when the electronic device is in a call state, the included value between the electronic device and the preset direction is determined, and whether there is an object shielding the aperture is determined. When the included angle between the electronic device and the preset direction is less than the preset angle, and the current intensity value of the infrared light is less than or equal to the upper limit and the current intensity value of the infrared light is greater than or equal to the lower limit, a display screen backlight state maintains unchanged. That is, if the electronic device is in a display screen backlight turned-off state at a previous time and the foregoing condition is met at a current time, the electronic device still maintains the display screen backlight turned-off state; or when the electronic device is in a display screen backlight turned-on state at a previous time and the foregoing condition is met at a current time, the electronic device still maintains the display screen backlight turned-on state.

FIG. 6 is a schematic structural diagram of an apparatus for controlling a display screen backlight according to the present disclosure. The apparatus for controlling a display screen backlight provided in this embodiment of the present disclosure is applied to an electronic device with an optical proximity sensor. An aperture is disposed on the electronic device, and the optical proximity sensor detects intensity of infrared light by using the aperture. As shown in FIG. 6, the apparatus includes a determining module 61 and a processing module 62.

The determining module 61 is configured to: when it is detected that an electronic device is in a call state, determine an included angle between the electronic device and a preset direction, and determine whether there is an object shielding an aperture.

The processing module 62 is configured to turn off the display screen backlight when the included angle between the electronic device and the preset direction is greater than or equal to a preset angle and there is an object shielding the aperture.

The apparatus in this embodiment of the present disclosure may be configured to execute the technical solution of the method embodiment shown in FIG. 2. An implementation principle and a technical effect of the apparatus are similar to those of the technical solution, and details are not described herein again.

Based on the foregoing embodiment, the preset direction may be a vertical direction. The determining module 61 may be further configured to determine an included angle between the vertical direction and an axis perpendicular to a plane where a display screen of the electronic device is located; or, in another implementation, the determining module 61 may be further configured to determine an included angle between the vertical direction and a plane where a display screen of the electronic device is located.

Optionally, the determining module 61 may be further configured to: determine a current intensity value of the infrared light; and if the current intensity value of the infrared light is greater than or equal to a preset threshold, determine that there is an object shielding the aperture, or if the current intensity value of the infrared light is less than a preset threshold, determine that no object shields the aperture.

It should be noted that when the preset threshold is an intensity value of infrared light received by the infrared receiver when a dark object shields the aperture.

Optionally, the processing module 62 may be further configured to turn on the display screen backlight when the included angle between the electronic device and the preset direction is greater than or equal to the preset angle and no object shields the aperture.

The apparatus for controlling a display screen backlight provided in this embodiment of the present disclosure is specifically configured to execute any embodiment of the method for controlling the display screen backlight. A technical principle and a technical effect of the apparatus for controlling the display screen backlight are similar to those of the embodiment of the method for controlling the display screen backlight, and no details are described herein again.

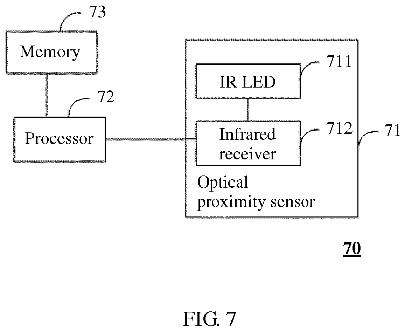

FIG. 7 is a schematic structural diagram of an electronic device for controlling a display screen backlight according to the present disclosure. As shown in FIG. 7, an electronic device 70 for controlling a display screen backlight provided in this embodiment of the present disclosure has an optical proximity sensor 71. The optical proximity sensor 71 includes an IR LED 711 and an infrared receiver 712, and an aperture (not shown in the figure) is disposed on the electronic device 70. The IR LED 711 emits infrared light, the infrared receiver 712 receives infrared light that is outside the aperture and that is reflected by an object located in a direction in which the IR LED emits the infrared light. The electronic device 70 may further include a processor 72 and a memory 73.

The memory 73 is configured to store an executable instruction.

The processor 72 is configured to execute the executable instruction stored in the memory 73, so as to implement the solution in any foregoing embodiment of the method for controlling the display screen backlight.

Optionally, the electronic device 70 may further include a gravity sensor (not shown). The gravity sensor is configured to determine an included angle between the electronic device 70 and a preset direction, and the determining an included angle between the electronic device 70 and a preset direction is specifically: determining an included angle between a vertical direction and an axis perpendicular to a plane where a display screen of the electronic device 70 is located; or determining an included angle between the vertical direction and a plane where a display screen of the electronic device 70 is located.

The electronic device provided in this embodiment is specifically configured to perform any foregoing embodiment of the method for controlling the display screen backlight. A technical principle and a technical effect of the electronic device are similar to those of the embodiment of the method for controlling the display screen backlight, and details are not described herein again. Persons of ordinary skill in the art may understand that all or some of the steps of the method embodiments may be implemented by a program instruction relevant hardware. The program may be stored in a non-transitory (non-transitory) computer readable storage medium. When the program runs, the steps of the method embodiments are performed. The foregoing storage medium includes: any medium that can store program code, such as a ROM, a RAM, a magnetic disk, or an optical disc.

## Claims

1. A method for controlling a display screen backlight, applied to an electronic device with an optical proximity sensor, wherein an aperture is disposed on the electronic device, the optical proximity sensor detects intensity of infrared light by using the aperture, wherein optical proximity sensor includes an infrared emitting diode and an infrared receiver and the method comprises:
in response to a determination that the electronic device is in a calling state, determining, by the electronic device, an included angle between the electronic device and a preset direction, and determining, by the electronic device, the intensity of the infrared light, wherein the included angle between the electronic device and the preset direction is an included angle between a vertical direction and an axis perpendicular to a plane where a display screen of the electronic device is located; or, is an included angle between a vertical direction and a plane where a display screen of the electronic device is located;
turning on, by the electronic device, the display screen backlight based on a determination that the intensity of the infrared light is less than a first threshold and a determination that the included angle between the electronic device and a preset direction is greater than or equal to the preset angle;
turning off, by the electronic device, the display screen backlight based on a determination that the intensity of the infrared light is less than a second threshold and the intensity of the infrared light is greater than or equal to the first threshold and a determination that the included angle between the electronic device and a preset direction is greater than or equal to the preset angle, wherein the first threshold is an intensity value of infrared light received by the optical proximity sensor when a dark object shields the aperture;
maintaining, by the electronic device, a state of the display screen backlight based on a determination that the intensity of the infrared light is less than or equal to a third threshold and the intensity of the infrared light is greater than or equal to the second threshold, and a determination that the included angle between the electronic device and the preset direction is less than the preset angle; and
turning off, by the electronic device, the display screen backlight based on a determination that the intensity of the infrared light is greater than the third threshold, no matter the included angle between the electronic device and the preset direction is greater than or equal to the preset angle, or the included angle between the electronic device and the preset direction is less than the preset angle, wherein the first threshold is less than the second threshold, and wherein the second threshold is less than the third threshold.

2. The method according to claim 1, wherein the preset direction is a vertical direction, and the determining an included angle step comprises
determining an included angle between the vertical direction and an axis perpendicular to a plane where a display screen of the electronic device is located.

3. The method according to claim 1, wherein the preset direction is a vertical direction, and the determining an included angle step comprises
determining an included angle between the vertical direction and a plane where a display screen of the electronic device is located.

4. An apparatus for controlling a display screen backlight, wherein the apparatus comprises:
a determining module, configured to: in response to a determination that an electronic device is in a calling state, determine an included angle between the electronic device and a preset direction, and determine an intensity of infrared light, wherein the included angle between the electronic device and the preset direction is an included angle between a vertical direction and an axis perpendicular to a plane where a display screen of the electronic device is located; or, is an included angle between a vertical direction and a plane where a display screen of the electronic device is located; and
a processing module, configured to:
turn on a display screen backlight of the electronic device based on a determination that the intensity of the infrared light is less than a first threshold and a determination that the included angle between the electronic device and a preset direction is greater than or equal to the preset angle;
turn off the display screen backlight of the electronic device based on a determination that the intensity of the infrared light is less than a second threshold and the intensity of the infrared light is greater than or equal to the first threshold and a determination that the included angle between the electronic device and a preset direction is greater than or equal to the preset angle, wherein the preset threshold is an intensity value of infrared light received by an optical proximity sensor when a dark object shields an aperture disposed on the electronic device, wherein the optical proximity sensor includes an infrared emitting diode and an infrared receiver and the infrared receiver detects the intensity of infrared light using the aperture;
maintain a state of the display screen backlight of the electronic device based on a determination that the intensity of the infrared light is less than or equal to a third threshold and the intensity of the infrared light is greater than or equal to the second threshold, and a determination that the included angle between the electronic device and the preset direction is less than the preset angle; and
turn off the display screen backlight of the electronic device based on a determination that the intensity of the infrared light is greater than the third threshold, no matter the included angle between the electronic device and the preset direction is greater than or equal to the preset angle, or the included angle between the electronic device and the preset direction is less than the preset angle, wherein the first threshold is less than the second threshold, and wherein the second threshold is less than the third threshold.

5. The apparatus according to claim 4, wherein the preset direction is a vertical direction, and the determining module is further configured to:
determine an included angle between the vertical direction and an axis perpendicular to a plane where a display screen of the electronic device is located.

6. The apparatus according to claim 4, wherein the preset direction is a vertical direction, and the determining module is further configured to:
determine an included angle between the vertical direction and a plane where a display screen of the electronic device is located.

7. A computer readable storage medium storing one or more programs, wherein the one or more programs comprise an instruction, and when being executed by an electronic device with an optical proximity sensor, the instruction enables the electronic device to execute the method according to any one of claims 1 to 3.

## Patentansprüche

1. Verfahren zum Steuern der Hintergrundbeleuchtung eines Anzeigebildschirms, die auf eine elektronische Vorrichtung mit einem optischen Näherungssensor angewendet wird, wobei eine Blende auf der elektronischen Vorrichtung angeordnet ist, der optische Näherungssensor die Intensität von Infrarotlicht durch Verwendung der Blende erkennt, wobei der optische Näherungssensor eine Infrarot emittierende Diode und einen Infrarotempfänger aufweist und das Verfahren umfasst:
als Reaktion auf eine Bestimmung, dass sich die elektronische Vorrichtung in einem Aufrufzustand befindet, Bestimmen eines eingeschlossenen Winkels zwischen der elektronischen Vorrichtung und einer vorgegebenen Richtung durch die elektronische Vorrichtung und Bestimmen der Intensität des Infrarotlichts durch die elektronische Vorrichtung, wobei der eingeschlossene Winkel zwischen der elektronischen Vorrichtung und der vorgegebenen Richtung ein eingeschlossener Winkel zwischen einer vertikalen Richtung und einer Achse rechtwinklig zu einer Ebene ist, in der sich ein Anzeigebildschirm der elektronischen Vorrichtung befindet; oder ein eingeschlossener Winkel zwischen einer vertikalen Richtung und einer Ebene ist, in der sich ein Anzeigebildschirm der elektronischen Vorrichtung befindet;
Einschalten der Hintergrundbeleuchtung des Anzeigebildschirms durch die elektronische Vorrichtung basierend auf einer Bestimmung, dass die Intensität des Infrarotlichts unterhalb eines ersten Schwellenwerts liegt, und einer Bestimmung, dass der eingeschlossene Winkel zwischen der elektronischen Vorrichtung und einer vorgegebenen Richtung größer oder gleich dem vorgegebenen Winkel ist;
Ausschalten der Hintergrundbeleuchtung des Anzeigebildschirms durch die elektronische Vorrichtung basierend auf einer Bestimmung, dass die Intensität des Infrarotlichts kleiner als ein zweiter Schwellenwert ist und die Intensität des Infrarotlichts größer oder gleich dem ersten Schwellenwert ist, und einer Bestimmung, dass der eingeschlossene Winkel zwischen der elektronischen Vorrichtung und einer vorgegeben Richtung größer oder gleich dem vorgegebenen Winkel ist, wobei der erste Schwellenwert ein Intensitätswert des Infrarotlichts ist, das durch den optischen Näherungssensor empfangen wird, wenn ein dunkles Objekt die Blende abschirmt;
Aufrechterhalten eines Zustands der Hintergrundbeleuchtung des Anzeigebildschirms durch die elektronische Vorrichtung basierend auf einer Bestimmung, dass die Intensität des Infrarotlichts kleiner oder gleich einem dritten Schwellenwert ist und die Intensität des Infrarotlichts größer oder gleich dem zweiten Schwellenwert ist, und einer Bestimmung, dass der eingeschlossene Winkel zwischen der elektronischen Vorrichtung und der vorgegebenen Richtung kleiner als der vorgegebene Winkel ist; und
Ausschalten der Hintergrundbeleuchtung des Anzeigebildschirms durch die elektronische Vorrichtung basierend auf einer Bestimmung, dass die Intensität des Infrarotlichts größer als der dritte Schwellenwert ist, unabhängig davon, ob der eingeschlossene Winkel zwischen der elektronischen Vorrichtung und der vorgegebenen Richtung größer oder gleich dem vorgegebenen Winkel ist oder ob der eingeschlossene Winkel zwischen der elektronischen Vorrichtung und der vorgegebenen Richtung kleiner als der vorgegebene Winkel ist, wobei der erste Schwellenwert kleiner als der zweite Schwellenwert ist und wobei der zweite Schwellenwert kleiner als der dritte Schwellenwert ist.

2. Verfahren gemäß Anspruch 1, wobei die vorgegebene Richtung eine vertikale Richtung ist und das Bestimmen eines eingeschlossenen Winkels das Bestimmen eines eingeschlossenen Winkels zwischen der vertikalen Richtung und einer Achse rechtwinklig zu einer Ebene umfasst, in der sich ein Anzeigebildschirm der elektronischen Vorrichtung befindet.

3. Verfahren gemäß Anspruch 1, wobei die vorgegebene Richtung eine vertikale Richtung ist und das Bestimmen eines eingeschlossenen Winkels das Bestimmen eines eingeschlossenen Winkels zwischen der vertikalen Richtung und einer Ebene umfasst, in der sich ein Anzeigebildschirm der elektronischen Vorrichtung befindet.

4. Vorrichtung zum Steuern einer Hintergrundbeleuchtung eines Anzeigebildschirms, wobei die Vorrichtung umfasst:
ein Bestimmungsmodul, das dazu ausgelegt ist, als Reaktion auf eine Bestimmung, dass sich eine elektronische Vorrichtung in einem Aufrufzustand befindet, einen eingeschlossenen Winkel zwischen der elektronischen Vorrichtung und einer vorgegebenen Richtung zu bestimmen und eine Intensität von Infrarotlicht zu bestimmen, wobei der eingeschlossene Winkel zwischen der elektronischen Vorrichtung und der vorgegebenen Richtung ein eingeschlossener Winkel zwischen einer vertikalen Richtung und einer Achse rechtwinklig zu einer Ebene ist, in der sich ein Anzeigebildschirm der elektronischen Vorrichtung befindet; oder ein eingeschlossener Winkel zwischen einer vertikalen Richtung und einer Ebene ist, in der sich ein Anzeigebildschirm der elektronischen Vorrichtung befindet; und
ein Verarbeitungsmodul, das dazu ausgelegt ist:
die Hintergrundbeleuchtung eines Anzeigebildschirms der elektronischen Vorrichtung basierend auf einer Bestimmung, dass die Intensität des Infrarotlichts unterhalb eines ersten Schwellenwerts liegt, und einer Bestimmung, dass der eingeschlossene Winkel zwischen der elektronischen Vorrichtung und einer vorgegebenen Richtung größer oder gleich dem vorgegebenen Winkel ist, einzuschalten;
die Hintergrundbeleuchtung des Anzeigebildschirms der elektronischen Vorrichtung basierend auf einer Bestimmung, dass die Intensität des Infrarotlichts kleiner als ein zweiter Schwellenwert ist und die Intensität des Infrarotlichts größer oder gleich dem ersten Schwellenwert ist, und einer Bestimmung, dass der eingeschlossene Winkel zwischen der elektronischen Vorrichtung und einer vorgegebenen Richtung größer oder gleich dem vorgegebenen Winkel ist, auszuschalten, wobei der vorgegebene Schwellenwert ein Intensitätswert von Infrarotlicht ist, das durch einen optischen Näherungssensor empfangen wird, wenn ein dunkles Objekt eine auf der elektronischen Vorrichtung angeordnete Blende abschirmt, wobei der optische Näherungssensor eine Infrarot emittierende Diode und einen Infrarotempfänger aufweist und der Infrarotempfänger die Intensität von Infrarotlicht unter Verwendung der Blende erkennt;
einen Zustand der Hintergrundbeleuchtung des Anzeigebildschirms der elektronischen Vorrichtung basierend auf einer Bestimmung, dass die Intensität des Infrarotlichts kleiner oder gleich einem dritten Schwellenwert und die Intensität des Infrarotlichts größer oder gleich dem zweiten Schwellenwert ist, und einer Bestimmung, dass der eingeschlossene Winkel zwischen der elektronischen Vorrichtung und der vorgegebenen Richtung kleiner als der vorgegebene Winkel ist, aufrechtzuerhalten; und
die Hintergrundbeleuchtung des Anzeigebildschirms der elektronischen Vorrichtung basierend auf einer Bestimmung, dass die Intensität des Infrarotlichts größer als der dritte Schwellenwert ist, auszuschalten, unabhängig davon, ob der eingeschlossene Winkel zwischen der elektronischen Vorrichtung und der vorgegebenen Richtung größer oder gleich dem vorgegebenen Winkel ist, oder ob der eingeschlossene Winkel zwischen der elektronischen Vorrichtung und der vorgegebenen Richtung kleiner als der vorgegebene Winkel ist, wobei der erste Schwellenwert kleiner als der zweite Schwellenwert ist, und wobei der zweite Schwellenwert kleiner als der dritte Schwellenwert ist.

5. Vorrichtung gemäß Anspruch 4, wobei die vorgegebene Richtung eine vertikale Richtung ist und das Bestimmungsmodul ferner dazu ausgelegt ist:
einen eingeschlossenen Winkel zwischen der vertikalen Richtung und einer Achse rechtwinklig zu einer Ebene, in der sich ein Anzeigebildschirm der elektronischen Vorrichtung befindet, zu bestimmen.

6. Vorrichtung gemäß Anspruch 4, wobei die vorgegebene Richtung eine vertikale Richtung ist und das Bestimmungsmodul ferner dazu ausgelegt ist:
einen eingeschlossenen Winkel zwischen der vertikalen Richtung und einer Ebene, in der sich ein Anzeigebildschirm der elektronischen Vorrichtung befindet, zu bestimmen.

7. Computerlesbares Speichermedium, das ein oder mehrere Programme speichert, wobei das eine oder die mehreren Programme eine Anweisung umfassen, und wenn sie durch eine elektronische Vorrichtung mit einem optischen Näherungssensor ausgeführt wird, die Anweisung es der elektronischen Vorrichtung ermöglicht, das Verfahren gemäß einem der Ansprüche 1 bis 3 auszuführen.

## Revendications

1. Procédé destiné à la commande d'un rétro-éclairage d'un écran d'affichage, appliqué à un dispositif électronique avec un capteur de proximité optique, une ouverture étant disposée sur le dispositif électronique, le capteur de proximité optique détectant une intensité de lumière infrarouge en utilisant l'ouverture, le capteur de proximité optique comprenant une diode émettrice infrarouge et un récepteur infrarouge et le procédé comprenant :
en réponse à une détermination que le dispositif électronique est dans un état d'appel, la détermination, par le dispositif électronique, d'un angle inclus entre le dispositif électronique et une direction prédéfinie, et la détermination, par le dispositif électronique de l'intensité de la lumière infrarouge, l'angle inclus entre le dispositif électronique et la direction prédéfinie étant un angle inclus entre une direction verticale et un axe perpendiculaire à un plan où un écran d'affichage du dispositif électronique est situé ; ou, étant un angle inclus entre une direction verticale et un plan où un écran d'affichage du dispositif électronique est situé ;
l'activation, par le dispositif électronique, du rétro-éclairage de l'écran d'affichage sur la base d'une détermination que l'intensité de la lumière infrarouge est inférieure à un premier seuil et d'une détermination que l'angle inclus entre le dispositif électronique et une direction prédéfinie est supérieur ou égal à l'angle prédéfini ;
la désactivation, par le dispositif électronique, du rétro-éclairage de l'écran d'affichage sur la base d'une détermination que l'intensité de la lumière infrarouge est inférieure à un deuxième seuil et que l'intensité de la lumière infrarouge est supérieure ou égale au premier seuil, et d'une détermination que l'angle inclus entre le dispositif électronique et une direction prédéfinie est supérieur ou égal à l'angle prédéfini, le premier seuil étant une valeur d'intensité de lumière infrarouge reçue par le capteur de proximité optique lorsqu'un objet sombre masque l'ouverture ;
le maintien, par le dispositif électronique, d'un état de rétroéclairage de l'écran d'affichage sur la base d'une détermination que l'intensité de la lumière infrarouge est inférieure ou égale à un troisième seuil et que l'intensité de la lumière infrarouge est supérieure ou égale au deuxième seuil, et d'une détermination que l'angle inclus entre le dispositif électronique et la direction prédéfinie est inférieur à l'angle prédéfini ; et
la désactivation, par le dispositif électronique, du rétro-éclairage de l'écran d'affichage sur la base d'une détermination que l'intensité de la lumière infrarouge est supérieure au troisième seuil, peu importe que l'angle inclus entre le dispositif électronique et la direction prédéfinie soit supérieur ou égal à l'angle prédéfini, ou que l'angle inclus entre le dispositif électronique et la direction prédéfinie soit inférieur à l'angle prédéfini, le premier seuil étant inférieur au deuxième seuil, et le deuxième seuil étant inférieur au troisième seuil.

2. Procédé selon la revendication 1, la direction prédéfinie étant une direction verticale, et la détermination d'un pas d'angle inclus comprenant :
la détermination d'un angle inclus entre la direction verticale et un axe perpendiculaire à un plan où un écran d'affichage du dispositif électronique est situé.

3. Procédé selon la revendication 1, la direction prédéfinie étant une direction verticale, et la détermination d'un angle inclus comprenant :
la détermination d'un angle inclus entre la direction verticale et un plan où un écran d'affichage de l'appareil électronique est situé.

4. Appareil destiné à la commande d'un rétro-éclairage d'un écran d'affichage, l'appareil comprenant :
un module de détermination, configuré pour : en réponse à une détermination qu'un dispositif électronique est dans un état d'appel, déterminer un angle inclus entre le dispositif électronique et une direction prédéfinie, et déterminer une intensité de lumière infrarouge, l'angle inclus entre le dispositif électronique et la direction prédéfinie étant un angle inclus entre une direction verticale et un axe perpendiculaire à un plan où un écran d'affichage du dispositif électronique est situé ; ou, étant un angle inclus entre une direction verticale et un plan où un écran d'affichage du dispositif électronique est situé ; et
un module de traitement configuré pour :
activer un rétro-éclairage d'un écran d'affichage du dispositif électronique sur la base d'une détermination que l'intensité de la lumière infrarouge est inférieure à un premier seuil et d'une détermination que l'angle inclus entre le dispositif électronique et une direction prédéfinie est supérieur ou égal à l'angle prédéfini ;
désactiver le rétro-éclairage de l'écran d'affichage du dispositif électronique sur la base d'une détermination que l'intensité de la lumière infrarouge est inférieure à un deuxième seuil et que l'intensité de la lumière infrarouge est supérieure ou égale au premier seuil et d'une détermination que l'angle inclus entre le dispositif électronique et une direction prédéfinie est supérieur ou égal à l'angle prédéfini, le seuil prédéfini étant une valeur d'intensité de lumière infrarouge reçue par un capteur de proximité optique lorsqu'un objet sombre masque une ouverture disposée sur le dispositif électronique, le capteur de proximité optique comprenant une diode émettrice infrarouge et un récepteur infrarouge et le récepteur infrarouge détectant l'intensité de lumière infrarouge en utilisant l'ouverture ;
maintenir un état de rétro-éclairage de l'écran d'affichage du dispositif électronique sur la base d'une détermination que l'intensité de la lumière infrarouge est inférieure ou égale à un troisième seuil et que l'intensité de la lumière infrarouge est supérieure ou égale au deuxième seuil, et d'une détermination que l'angle inclus entre le dispositif électronique et la direction prédéfinie est inférieur à l'angle prédéfini ; et
désactiver le rétro-éclairage de l'écran d'affichage du dispositif électronique sur la base d'une détermination que l'intensité de la lumière infrarouge est supérieure au troisième seuil, peu importe que l'angle inclus entre le dispositif électronique et la direction prédéfinie soit supérieur ou égal à l'angle prédéfini, ou que l'angle inclus entre le dispositif électronique et la direction prédéfinie soit inférieur à l'angle prédéfini, le premier seuil étant inférieur au deuxième seuil, et le deuxième seuil étant inférieur au troisième seuil.

5. Appareil selon la revendication 4, la direction prédéfinie étant une direction verticale, et le module de détermination étant en outre configuré pour :
déterminer un angle inclus entre la direction verticale et un axe perpendiculaire à un plan où un écran d'affichage du dispositif électronique est situé.

6. Appareil selon la revendication 4, la direction prédéfinie étant une direction verticale, et le module de détermination étant en outre configuré pour :
déterminer un angle inclus entre la direction verticale et un plan où un écran d'affichage du dispositif électronique est situé.

7. Support de stockage lisible par ordinateur stockant un ou plusieurs programmes, le ou les programmes comprenant une instruction, et lorsqu'elle est exécutée par un dispositif électronique avec un capteur de proximité optique, l'instruction permettant au dispositif électronique d'exécuter le procédé selon l'une quelconque des revendications 1 à 3.
